# EUROPEAN PATENT SPECIFICATION

(11) **EP 2 213 209 B1**
(45) Date of publication and mention of the grant of the patent: **29.02.2012**
(21) Application number: 10159925.6
(22) Date of filing: 11.09.2006
(51) Int. Cl.: A47J 29/02

(54) **Poach pod**
Pochierbecher
Nacelle à pocher

(43) Date of publication of application: 04.08.2010
(62) Divisional of application: 06814541.6
(73) Proprietor: Fusionbrands Inc., Naples, NY 14512 (US)
(72) Inventor: Stewart, Anna, Naples NY 14512 (US); Stewart, Stephen, Naples NY 14512 (US)
(74) Representative: Jordan, Volker Otto Wilhelm

(56) References cited:
- EP-A2- 1 391 173
- FR-A1- 2 214 443
- US-A- 3 757 674
- US-A1- 2005 211 101

## Description

### TECHNICAL FIELD

The disclosed embodiments relate to food containment devices for use during cooking, and more particularly to a device for poaching eggs. A method of using a floatable one piece containment cooking device in agreement with the preamble part of claim 1 is shown in US 2005/0211101 A1.

### BACKGROUND

Making an acceptable poached egg is a challenge for most people. One contributing factor is that poaching eggs is generally not a daily occurrence with most people. This may result in a user under-cooking or over-cooking an egg. Additionally, there is a tendency with conventional egg poachers for the egg to stick to the cooking surface, yielding unacceptable results.

There are several generally accepted features for an acceptable poached egg. One feature is an egg whose whites have been cooked to set but the yolk is still partially runny. Another feature is that the egg remains intact without losing significant volume into the water. Another feature is an egg that does not stick to the cooking device, since once the egg sticks there is egg loss that occurs and the likelihood for bursting the yolk during removal is higher.

Conventional cooking devices dedicated to poaching eggs are generally bulky and require precious cabinet space for storage. Also, with conventional poaching devices the eggs generally stick to the cooking surface of the device. Some conventional poaching devices have stainless egg shaped holders that submerge in water and have a handle for removal from water. The drawback of these devices is that they have small holes in the bottom area, some of the egg is lost through these holes, plus the egg tends to stick in these holes. Recently devices for the poaching of eggs have been made of silicon. However even in the known silicone versions the holes in the bottom cause egg loss and cause some sticking as egg hardens within these holes. This may increase the cleaning time.

Many of the conventional egg poachers have only one function - to poach eggs - and have no further utility. Also many of the convention egg poachers are designed to poach multiple eggs simultaneously. Single people, couples with different schedules, dieters, etc. may only want to poach one egg or prepare a single service portion of a food item placed into a cooking device such as a poacher.

### SUMMARY

In view of the foregoing, the invention provides a method of cooking a food item as defined in claim 1.

Preferred embodiments are defined in the subclaims and discussed in the following.

In an exemplary embodiment the food containment cooking device is comprised of a one piece flexible bowl like structure with an inside, an outside, a bottom and a wall proceeding from the bottom that is angled outward from the bottom. This structure forms a hollowed out space, or cavity, within the structure into which food items may be placed. The bottom and the wall are dimensioned to facilitate floating in boiling water when a food item, such as an egg yolk and accompanying egg white, are contained within, e.g., the bottom is curved so the device rocks back and forth in boiling water and the walls are splayed outward to increase volume and stability. The wall thickness is about .027 inches at the bottom and graduates to .057 inches towards the top. In a preferred embodiment the device is dimensioned to provide a single serving, e.g. the poaching of one egg.

In a preferred embodiment the material used to form the food containment cooking device is made from highly heat resistant silicon. Depending on the functional characteristics desired the wall thickness may vary between .015 inches and .090 inches. In other embodiments the device may be made from flexible plastic.

In some embodiments the device invention may be further comprised of one or more tabs that protrude upward from the top of the wall so that a user's fingers may grasp the tabs for removing the food containment cooking device from hot water.

In other embodiments the device may be further comprised of a foot or flat portion on the bottom most portion of the bottom surface of the food containment cooking device so that the device may rest in an upright position on a counter or in the microwave.

In other embodiments the device may be further comprised of one or more holes at the top of the wall. In embodiments having tabs, the holes may be disposed therein. The holes may be used for the placement of retail tags, for hanging on a hook, to assist in the removal of the device from hot water.

In another embodiment three or more of the devices may be connected or formed together in an arrangement that maintains the floating feature while allowing the cooking of more than one serving of a food item.

When the device is in a substantially upright position it facilitates the holding of food items such as eggs, rice, cake batter, flan, frozen desserts, and the like. This holding may be during cooking, e.g. the device is placed in a pot or pan in the oven, on the stove top, microwave. This holding may be during storage in a refrigerator or freezer.

In one embodiment the food containment cooking device made of a flexible material, e.g. high temperature resistant silicon, which is floatable and is formed in one piece to have a curved bottom and a wall that seamlessly encompasses the bottom and protrudes from the bottom upward at an obtuse angle to form a cavity and a wall top edge having a plurality of undulations. In an exemplary embodiment these undulations for three peaks and three valleys. The peaks form tabs that may or may not have a hole formed therein, depending on the embodiment. The thickness of the flexible material is preferably 0.090 inches, but may be less than that thickness, depending on the cooking characteristies desired.

In some embodiments the bottom-most portion of the bottom may be flat to give the device stability when placed on a flat surface.

The device departs from certain prior art in several features. The ability to float is one. The ability to float without tipping over and spilling held food items during boiling is another. Another feature is the ability of the device to float and have the held food items surrounded by hot water for even, rapid cooking is another. Another feature is the prevention of egg matter being lost into the water. Another feature is that the smoothness of the surface of the device deters an egg sticking to the silicon. Another feature of the device is that the wall thickness of the device may be dimensioned to achieve a 4-minute soft poach or a 6-minute firm poach.

The device is designed for the boiling of a food item place therein. This is accomplished by placing the device in enough water to permit floating, resulting in heat being distributed evenly around the contained food and resulting in rapid cooking. The poaching of an egg is one use of the device in boiling waster. The device can also be used to mimic a double boiler for the melting of chocolate or sugar. The preparation of flan is another food that this device would be particularly helpful in making due to the inherent non-stick features of the material and that the device floats in a water bath.

Another feature of the device is that it is also designed for the baking of food items placed therein, as well as the microwaving of food items placed therein. The device may be used to give a unique dome shape to baked or micro-waved foods.

Another aspect of the device is that it is also designed to be used as a molding vessel. The device may be positioned upside down and a melted substance, e.g. melted chocolate or sugar, drizzled over the device. The device with the drizzle may then be placed in the freezer; the device may later be removed from the freezer and the drizzled substance removed from the device by peeling the device away from drizzled substance. The arched substance that remains can then be used as a stylish accent over desserts, e.g., ice cream, pies, miniature pastries, and the like. In the upright position the device may be used as a frozen dessert cup.

Another aspect of the device is that is may be manufactured economically.

Another aspect of the device is that it may be made from readily available materials.

These and other features and advantages of the present invention will be presented in more detail in the following specification of the invention and the accompanying figures, which illustrate by way of example the principles of the invention.

There are additional features of the invention that will be described hereinafter and which will form the subject matter of the claims appended hereto. In this respect, before explaining at least one embodiment of the invention in detail, it is to be understood that the invention is not limited in its application to the details of construction and to the arrangements of the components set forth in the following description or illustrated in the drawings. The invention is capable of other embodiments and of being practiced and carried out in various ways. Also, it is to be understood that the phraseology and terminology employed herein are for the purpose of description and should not be regarded as limiting.

As such, those skilled in the art will appreciate that the conception, upon which this disclosure is based, may readily be utilized as a basis for the designing of other structures, methods and systems for carrying out the several purposes of the present invention. It is important, therefore, that the claims be regarded as including such equivalent constructions insofar as they do not depart from the scope of the present invention such as defined by the claims.

### BRIEF DESCRIPTION OF DRAWINGS

Figure 1 illustrates a perspective view of a food containment cooking device, according to an embodiment of the present invention.
Figure 2 illustrates a front plan view of a food containment cooking device, according to an embodiment of the present invention.
Figure 3 illustrates a left side plan view of a food containment cooking device, according to an embodiment of the present invention.
Figure 4 illustrates a top plan view of a food containment cooking device, according to an embodiment of the present invention.
Figure 5 illustrates a bottom plan view of a food containment cooking device, according to an embodiment of the present invention.

### DETAILED DESCRIPTION

The present invention will now be described in detail with reference to a few preferred embodiments thereof as illustrated in the accompanying drawings. In the following description, numerous specific details are set forth in order to provide a thorough understanding of the present invention. It will be apparent, however, to one skilled in the art, that the present invention may be practiced without some or all of these specific details. In other instances, well known operations have not been described in detail so not to unnecessarily obscure the present invention.

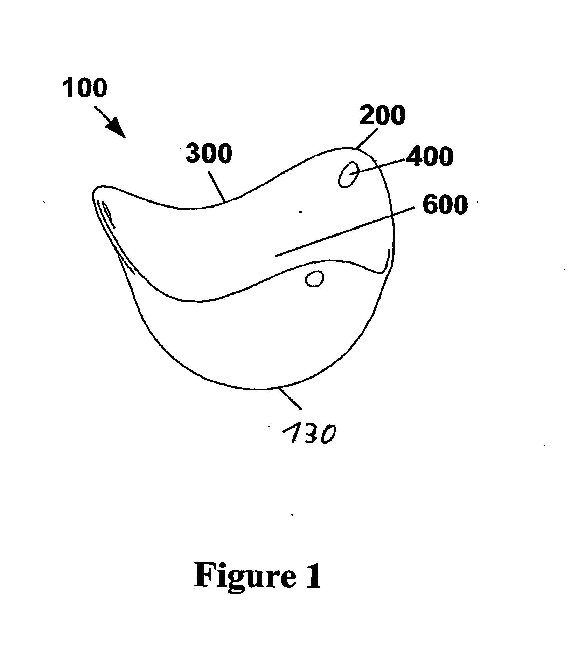

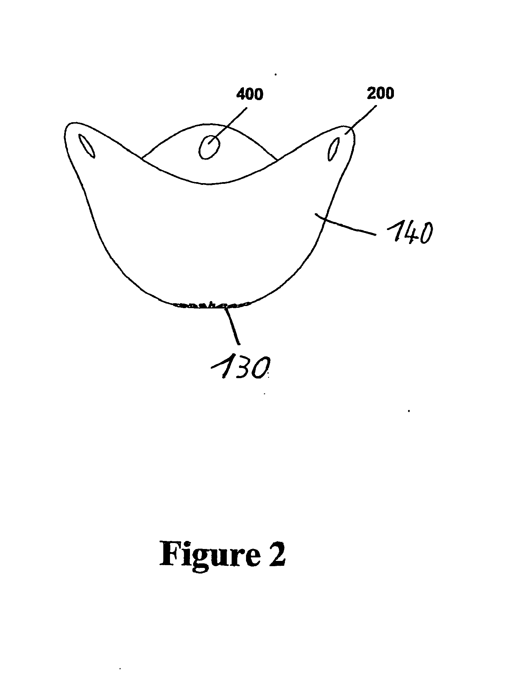

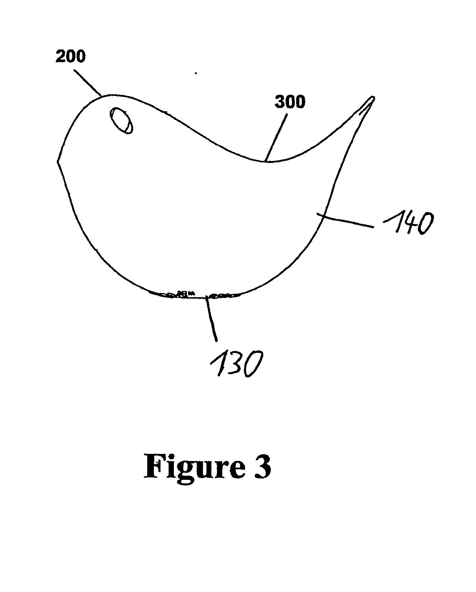

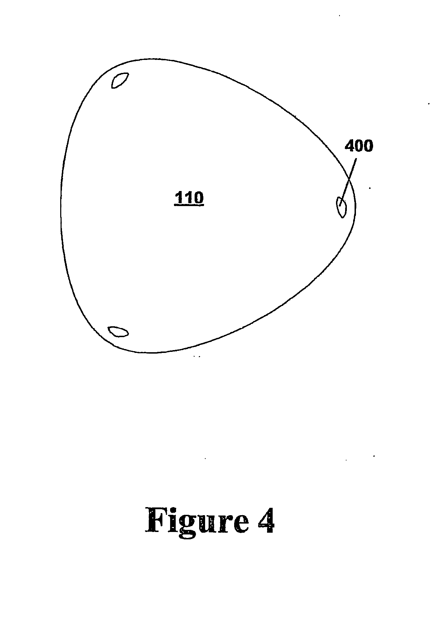

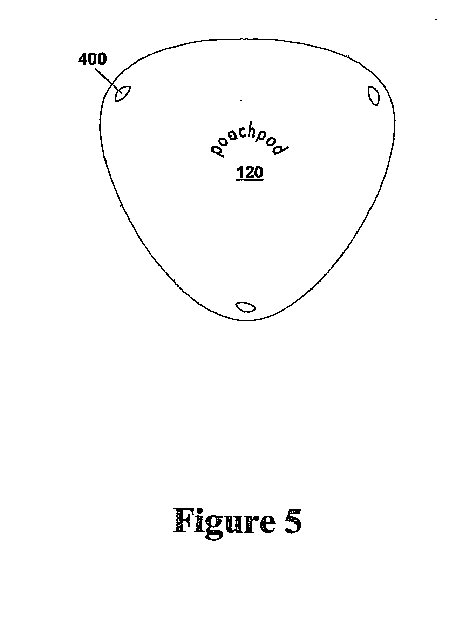

Referring now to Figure 1 through Figure 5 a food containment cooking device 100 is comprised of a bottom 130 from which a wall 140 protrudes upward at an obtuse angle and encompasses the bottom 130 forming an outside surface 120, an inside surface 110 and a cavity 600. The thickness of the wall 140 is preferably 0.090 inches or slightly thinner in order that the boiling water cooking time for an egg may be between 4 minutes and 6 minutes, based on the desired consistency of the egg yolk. In some embodiments the top of the wall 140 may be of uniform height or may have an undulating height. In one embodiment having an undulating height, the alternating peaks and valleys of the undulation form a plurality of tab 200 and valley 300. In a preferred embodiment there are three substantially equally spaced tabs 200 separated by three substantially equally spaced valleys 300. In some embodiments, at least one of tab 200 has a tab hole 400 formed within tab 200. In other embodiments a tab hole 400 is formed with each tab 200.

In one embodiment the food containment cooking device is made as follows:
- Create a metal mold by cutting a semi circular shaped cavity that will create a thin wall thickness of .090 inches or thinner.
- Dimension the cavity deep enough to hold the volume of one egg.
- Fill the mold with silicone or other suitable material.
- Cure the material.
- Remove the material from the mold.

From the foregoing, it will be appreciated that, although specific embodiments of the invention have been described herein for purposes of illustration, various modifications may be made without deviating from the scope of the invention such as defined by the claims. For example, many of the features and components described above in the context of a particular food containment cooking device configuration can be incorporated into other configurations in accordance with other embodiments of the invention. Accordingly, the invention is not limited except by the appended claims.

## Claims

1. Method of using a floatable one piece food containment cooking device (100), which is made of a flexible material and comprises:
- a bottom (130), and
- a wall,
wherein the bottom (130) is curved and the wall seamlessly encompasses the bottom (130) and protrudes from the bottom (130) upward at an obtuse angle to form a cavity (600) and
a wall top edge having a plurality of undulations;
**characterized in that** the one piece food containment cooking device (100) is used for the boiling of a food item placed therein by placing the one piece food containment cooking device (100) with said food item contained therein in enough boiling water to permit floating of the one piece food containment cocking device (100).

2. The method of claim 1, wherein the flexible material is made from a high temperature resistant silicone composition.

3. The method of claim 1 or 2, wherein the undulations form a plurality of peaks (200) and valleys (300), the peaks (200) protruding upwardly.

4. The method of claim 3, wherein the plurality of undulations form three peaks (200) and three valleys (300).

5. The method of claim 4, wherein at least one of the three peaks (200) as a hole (400) formed therein.

6. The method of one of claims 1 to 5, wherein the flexible material is at most 2,29 mm [0:090 inches] in thickness.

7. The method of one of claims 1 to 6, wherein the bottom (130) has a central flat portion that seamlessly protrudes into a non-central curved portion and wherein the wall seamlessly encompasses the non-central curved portion and protrudes from the non-central curved portion upward at the obtuse angle to form the cavity (600) and the wall top edge.

8. The method of one of claims 1 to 7, wherein the one piece food containment cooking device (100) is used for poaching an egg by placing the egg yolk and accompanying egg white as food item to be boiled therein and by placing the food containment cooking device (100) with said egg yolk and accompanying egg white contained therein in enough boiling water to permit floating of the one piece food containment cocking device (100).

## Patentansprüche

1. Verfahren der Verwendung einer schwimmfähigen einstückigen Nahrungsmittelaufnahme-Kochvorrichtung (100), die aus flexiblem Material hergestellt ist und umfasst:
einen Boden (130), und
eine Wand,
worin der Boden (130) gekrümmt ist und die Wand den Boden (130) nahtlos umgibt und vom Boden (130) mit einem stumpfen Winkel nach oben vorsteht, um einen Hohlraum (600) und einen Wandoberrand, der eine Mehrzahl von Wellen aufweist, zu bilden;
**dadurch gekennzeichnet, dass** die einstückige Nahrungsmittelaufnahme-Kochvorrichtung (100) zum Kochen eines darin angeordneten Nahrungsmittelgegenstands verwendet wird, indem die einstückige Nahrungsmittelaufnahme-Kochvorrichtung (100) mit dem darin enthaltenen Nahrungsmittelgegenstand in ausreichend Kochwasser angeordnet wird, um zu erlauben, dass die einstückige Nahrungsmittelaufnahme-Kochvorrichtung (100) schwimmt.

2. Das Verfahren von Anspruch 1, worin das flexible Material aus einer hochtemperaturbeständigen Silikonzusammensetzung hergestellt ist.

3. Das Verfahren von Anspruch 1 oder 2, worin die Wellen eine Mehrzahl von Gipfeln (200) und Tälern (300) bilden, wobei die Gipfel (200) nach oben vorstehen.

4. Das Verfahren von Anspruch 3, worin die Mehrzahl von Wellen drei Gipfel (200) und drei Täler (300) bilden.

5. Das Verfahren von Anspruch 4, worin in zumindest einem der drei Gipfel (200) ein Loch (400) ausgebildet ist.

6. Das Verfahren von einem der Ansprüche 1 bis 5, worin das flexible Material eine Dicke von höchstens 2,29 mm (0,090 Zoll) hat.

7. Das Verfahren von einem der Ansprüche 1 bis 6, worin der Boden (130) einen flachen Mittelabschnitt aufweist, der nahtlos in einen nicht mittigen gekrümmten Abschnitt vorsteht, und worin die Wand den nicht mittigen gekrümmten Abschnitt nahtlos umgibt und von dem nicht mittigen gekrümmten Abschnitt mit dem stumpfen Winkel nach oben vorsteht, um den Hohlraum (600) und den Wandoberrand zu bilden.

8. Das Verfahren von einem der Ansprüche 1 bis 7, worin die einstückige Nahrungsmittelaufnahme-Kochvorrichtung (100) zum Pochieren eines Eis verwendet wird, indem das Eigelb und das zugehörige Eiweiß als zu kochender Nahrungsmittelgegenstand darin angeordnet werden und indem die Nahrungsmittetaufnahme-Kochvorrichtung (100) mit dem darin enthaltenen Eigelb und zugehörigen Eiweiß in ausreichend Kochwasser angeordnet werden, um zu erlauben, dass die einstückige Nahrungsmittelaufnahme-Kochvorrichtung (100) schwimmt.

## Revendications

1. Procédé d'utilisation d'un dispositif de cuisson monobloc flottant à confinement d'aliment (100), qui est fait d'un matériau flexible et comprend :
- un fond (130), et
- une paroi,
dans lequel le fond (130) est incurvé et la paroi englobe le fond (130) de façon intégrée et fait saillie à partir du fond (130) vers le haut à un angle obtus pour former une cavité (600) et un bord supérieur de paroi comportant une pluralité d'ondulations ;
**caractérisé en ce que** le dispositif de cuisson monobloc à confinement d'aliment (100) est utilisé pour faire cuire un article alimentaire placé dans celui-ci en plaçant le dispositif de cuisson à confinement d'aliment (100) avec ledit article alimentaire contenu dans celui-ci dans suffisamment d'eau en ébullition pour permettre le flottement du dispositif de cuisson monobloc à confinement d'aliment (100).

2. Procédé selon la revendication 1, dans lequel le matériau flexible est fait d'une composition de silicone résistante aux hautes températures.

3. Procédé selon la revendication 1 ou 2, dans lequel les ondulations forment une pluralité de crêtes (200) et de creux (300), les crêtes (200) faisant saillie vers le haut.

4. Procédé selon la revendication 3, dans lequel la pluralité d'ondulations forment trois crêtes (200) et trois creux (300).

5. Procédé selon la revendication 4, dans lequel au moins une des trois crêtes (200) comporte un orifice (400) formé dans celle-ci.

6. Procédé selon une quelconque des revendications 1 à 5, dans lequel le matériau flexible mesure au plus 2,29 mm (0,090 pouce) d'épaisseur.

7. Procédé selon une quelconque des revendications 1 à 6, dans lequel le fond (130) comporte une partie plate centrale qui fait saillie de façon intégrée dans une partie incurvée non centrale et dans lequel la paroi englobe la partie incurvée non centrale de façon intégrée et fait saillie à partir de la partie incurvée non centrale vers le haut à l'angle obtus pour former la cavité (600) et le bord supérieur de paroi.

8. Procédé selon une quelconque des revendications 1 à 7, dans lequel le dispositif de cuisson monobloc à confinement d'aliment (100) est utilisé pour pocher un oeuf en plaçant le jaune d'oeuf et le blanc d'oeuf associé en tant qu'article alimentaire destiné à être cuit dans celui-ci et en plaçant le dispositif de cuisson à confinement d'aliment (100) avec ledit jaune d'oeuf et ledit blanc d'oeuf associé contenus dans celui-ci dans suffisamment d'eau en ébullition pour permettre le flottement du dispositif de cuisson monobloc à confinement d'aliment (100).
